# EUROPEAN PATENT APPLICATION

(11) **EP 4 764 346 A1**
(43) Date of publication of application: **24.06.2026**
(21) Application number: 25152843.6
(22) Date of filing: 20.01.2025
(51) Int. Cl.: F24H 3/04, H05B 1/02

(54) **SURFACE TEMPERATURE SENSING HEAT GUN**

(30) Priority: 17.12.2024 US 202418983965
(71) Applicant: Master Appliance Corporation, Racine, WI 53403 (US)
(72) Inventor: Hirsch, Nicholas J., Wind Lake, 53185 (US); Thorell, Marvin D., Racine, 53403 (US); Landowski, Steve, Kenosha, 53142 (US); Lukowicz, Sam, Caledonia, 53108 (US)
(74) Representative: Forresters IP LLP

(57) **Abstract**

A heat gun including a main housing, a power module, a control board, a heating element having a hollow core with an inside diameter, an IR sensor for measuring surface temperature concentrically sensing temperature through the hollow core and having a field of view smaller than the inside diameter of the hollow core and optionally a laser mounted in the hollow core emitting a light beam parallel to a center axis of the field of view of the IR sensor.

## Description

### FIELD OF THE INVENTION

The invention relates to a heat gun, and more specifically, to a surface temperature sensing heat gun using an IR sensor sensing through a hollow core of a heating element for measuring surface temperature of the surface being heated by the heat gun.

### BACKGROUND OF THE INVENTION

In certain heat gun applications, it is desirable to know the temperature of the surface as it is being heated either to ensure it obtains the prescribed temperature and/or to ensure the temperature does not exceed a maximum temperature. The desire is to measure the surface being heated at the point where the hot air is impinging on the surface. Once the temperature is achieved, depending on the application, the heat is either maintained in a desired temperature range for a prescribed time or the operator stops heating that area by moving to another area or shutting the heat gun off.

An IR sensor can be used to measure a temperature of a surface as it is being heated. When using a heat gun, there are three commonly used methods to measure the surface temperature of an object being heated. The first method includes a two-handed operation where an operator uses one hand to operate the heat gun and one hand to operate the IR sensor. Two handed operations are very imprecise in that there is no way to ensure the IR sensor is pointed at the surface that is being heated by the heated air of the heat gun.

The second method includes the IR sensor being mounted to the exterior of the heat gun and mounted non-concentric with the heating element of the heat gun. Typically, the IR sensor has its own power source but could also use the power from the heat gun. The mounted IR sensor has its own temperature readout and is not thus integrated into the controls of the heat gun so that the sensed surface temperature is not an input into the control system of the heat gun. In the current state of the art configuration, the IR sensor is typically mounted at a slight angle above the heating element such that the field of view (FOV) of the IR sensor will cross the path of the heated air leaving the heat gun. Typically, the intersection of the IR sensor's FOV and the heated air is three to four inches in front of the heat gun nozzle. This intersection point is typically identified by two lasers that converge where the IR sensor's FOV and the heated air stream cross. When the heat gun with an IR sensor is pointed at a surface, the distance the heat gun is held from the surface is adjusted until the two lasers intersect thus ensuring the IR sensor is looking at the zone on the surface being heated.

The third method includes a heat gun having an integrated IR sensor. The IR sensor is mounted non-concentric with the heat gun heating element and is integrated into the circuitry of the heat gun allowing control of the heating element and therefore control of the heat output of the gun. In the current state of the art configuration, the IR sensor is mounted either above, below or to the sides of the heating element and mounted at a slight angle such that the FOV of the IR sensor will cross the path of the heated air leaving the heat gun. Typically, this intersection of the IR sensor's FOV and the heated zone on the surface is three to four inches in front of the heat gun nozzle. This intersection point is typically identified by the two lasers as described above.

With both the second and third methods where the IR sensor is mounted non-concentric with the heat gun heating element, the IR sensor must be mounted on the heat gun at an angle such that the sensing area of the IR sensor crosses the heating zone of the heat gun. The intersection of the heating zone and the sensing zone cross is at a predetermined distance in front of the heat gun. If the gun is not held at that distance, the IR sensor looks at an area not being heated and therefore not providing the desired surface temperature reading. Additionally, due to where the IR sensor is mounted, it can be blocked either intentionally or by accident resulting in inaccurate surface temperature readings.

### SUMMARY OF THE INVENTION

In one construction, the disclosure provides a heat gun including a main housing, a power module, a control board, a heating element having a hollow core and an IR sensor for measuring a surface temperature by sensing through the hollow core of the heating element.

In another construction, the disclosure provides a heat gun including a housing, a power module, a control board, a heating element having a hollow core with an inside diameter, an IR sensor for measuring surface temperature by concentrically sensing temperature through the hollow core and having a field-of-view smaller than the inside diameter of the hollow core and a laser emitting a light beam parallel to a center axis of the field-of-view of the IR sensor.

In another construction, the disclosure provides a surface temperature measuring assembly for use with a heat gun having a heating element with a hollow core including a holder positionable within the interior the heat gun adjacent the heating element and an IR sensor for measuring surface temperature and mountable in the holder and having a field-of-view within the hollow core of the heating element and in electrical communication with the heat gun.

In another construction, the disclosure provides a heat gun including a main housing including a power module, a plug in heating element selectively removable from the power module and electrically communicable with the power module, the heating element having a hollow core and a sensor holder positioned between the power module and the heating element, the sensor holder supporting an IR sensor and a laser, both in electrical communication with the heat gun.

Other aspects of the disclosure will become apparent by consideration of the detailed description and accompanying drawings.

### BRIEF DESCRIPTION OF THE DRAWINGS

FIG. 1 is a perspective view of a heat gun.
FIG. 2 is a sectional view along line 2-2 of FIG. 1.
FIG. 3 is a side view of a power module.
FIG. 4 is a sectional view taken along line 4-4 of FIG. 1
FIG. 5 is an end view of the heat gun.
FIG. 6 is an exploded view illustrating a Fresnel lens.
FIG. 7 is an exploded view illustrating an insulated tube.
FIG. 8 is an exploded view illustrating a plug-in heating element and a sensor holder.
FIG. 9 is an exploded view illustrating a plug-in heating element and a sensor holder.
FIG. 10 is a perspective view of a plug in heating element.
FIG. 11 is an exploded view of the heating element of FIG. 9.
FIG. 12 is a perspective view of a plug in heating element.
FIG. 13 is an exploded view of the heating element of FIG. 11.
FIG. 14 is a perspective view of a plug in heating element.
FIG. 15 is an exploded view of the heating element of FIG. 13.
FIG. 16 is a perspective view of a plug in heating element.
FIG. 17 is an exploded view of the heating element of FIG. 15.
FIG. 18 is a perspective view of a plug in heating element.
FIG. 19 is an exploded view of the heating element of FIG. 17.
FIG. 20 is a perspective view of a plug in heating element.
FIG. 21 is an exploded view of the heating element of FIG. 19.
FIG. 22 is a perspective view of a plug in heating element.
FIG. 23 is an exploded view of the heating element of FIG. 21.
FIG. 24 is an exploded view of a plug in heating element.
FIG. 25 is a side view of the sensor holder with the inline IR sensor and the laser.
FIG. 26 is a view of the heat gun in use measuring the temperature of a surface.

### DETAILED DESCRIPTION OF THE INVENTION

Before any constructions of the disclosure are explained in detail, it is to be understood that the disclosure is not limited in its application to the details of construction and the arrangement of components set forth in the following description or illustrated in the following drawings. The disclosure is capable of other constructions and of being practiced or of being carried out in various ways.

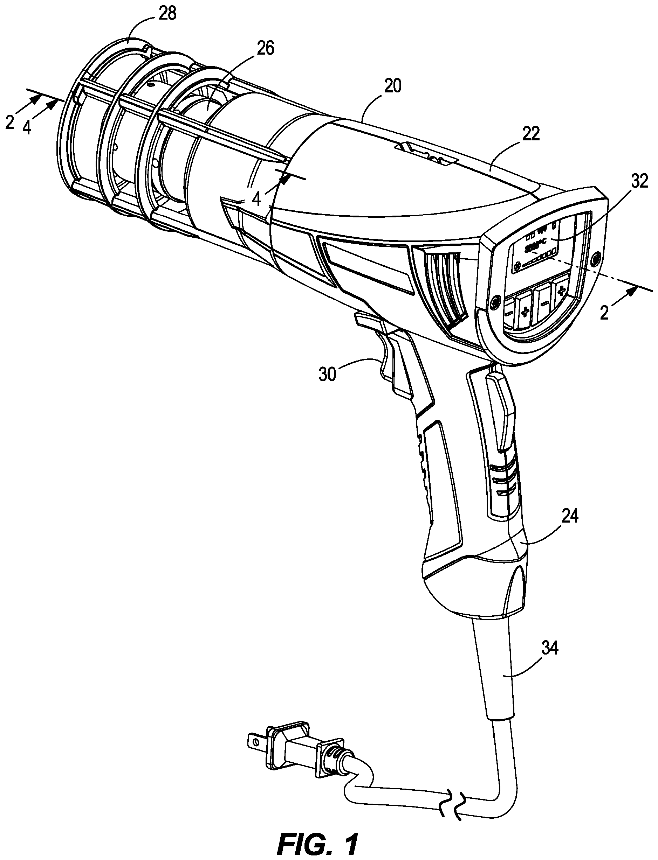

FIG. 1 illustrates an exterior of a heat gun 20 including a main housing 22, a handle 24, a nozzle 26, a nozzle guard 28, a trigger 30, a control display 32 and a power cord 34, all of which are components standard to heat guns and known by those of skill in the art.

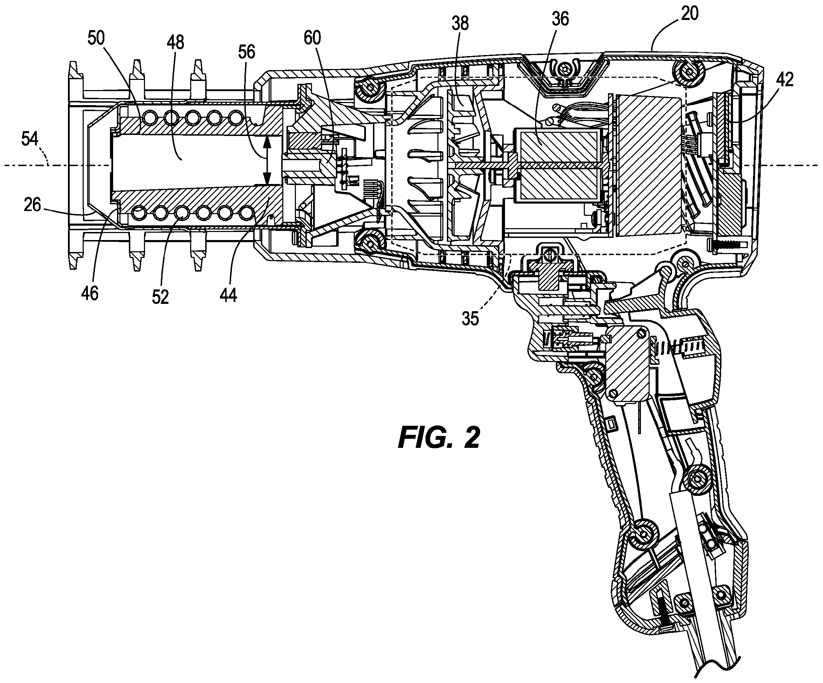

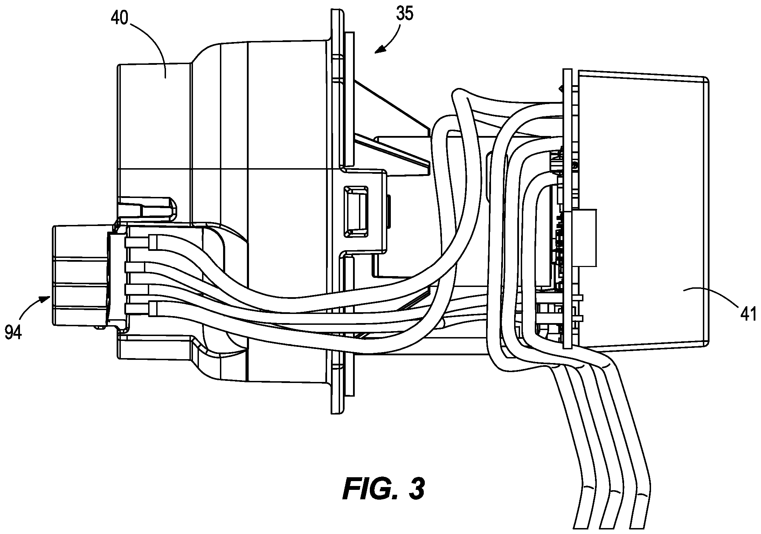

FIGS. 2 and 3 illustrates the interior of the heat gun 20 including a power module 35 that includes the motor 36, a fan 38, a fan housing 40, and a low voltage power supply 41. The heat gun 20 also includes a control board 42.

Continuing to refer to FIG. 2, the heat gun 20 includes specialized heating element 44. The heating element 44 is preferably constructed of a ceramic frame 46 preferably having a hollow core 48, however, other types of heating elements can also be utilized. The hollow core 48 is defined by a wall 50, a wire coil 52 wound around the frame 46, a central axis 54 and an inside diameter 56. The heating element 44 is electrically connected to the power module 35 in the main housing 22 such that when electrically energized, the wire coil 52 heats up. In normal operation, when the heat gun 20 is run in heat mode, the heating element 44 is energized and the motor 36 turns the fan 38 such that air is circulated over the energized wire coil 52 where the heat energy is transferred from the heated wire coil 52 to the air and then discharged from the nozzle 26 onto a surface to be heated. The control board 42 communicates with power module 35 and enables the speed of the fan 38 or the energy to the heating element to be varied by an operator.

For surface temperature measurement and control, the heat gun 20 includes a specifically located IR sensor 60 for measuring a temperature of a surface. The IR sensor 60 is preferably integrated into and in communication with the control board 42 which modulates the heating element 44 current as a target temperature is approached and which maintains the surface temperature as will be described in more detail below. An example of an IR sensor 60 is model MLX90614ESF available from Melexis, however, other IR sensors can also be utilized with the present invention.

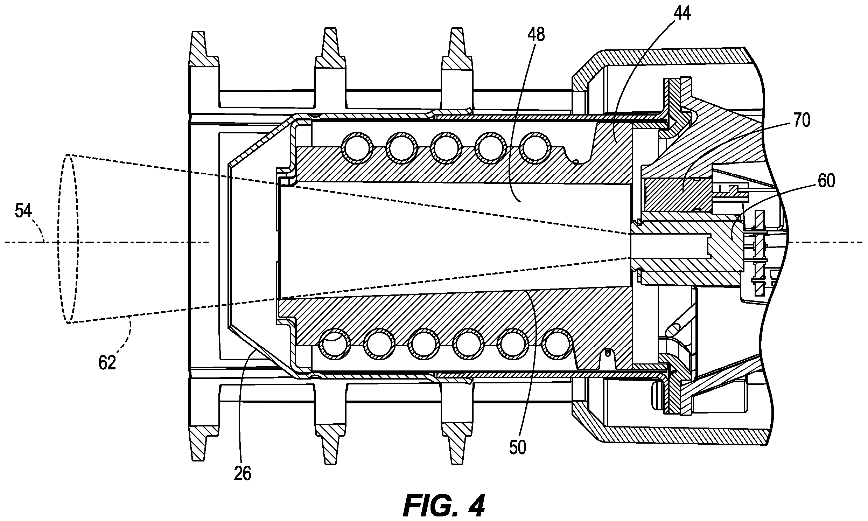

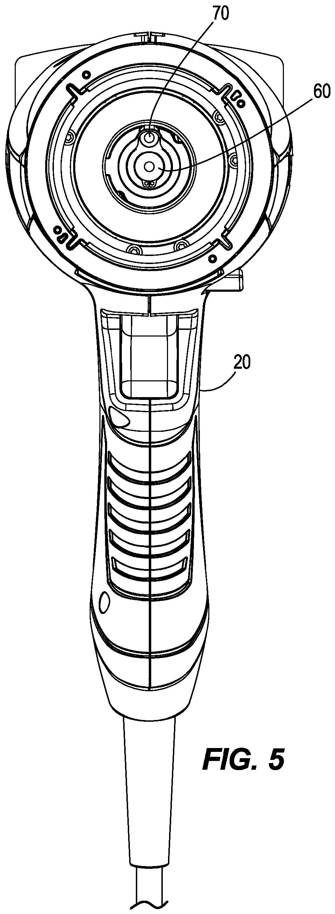

As shown in FIGS. 4 and 5, the IR sensor 60 is positioned or mounted within or adjacent the hollow core 48 of the heating element 44 such that the IR sensor 60 senses through the hollow core 48. Preferably, the IR sensor 60 is positioned concentric or near concentric to the hollow core 48 of the heating element 44. In this position, the FOV 62 of the IR sensor 60 runs down the center axis 54 of the heating element 44. As the heating element 44 heats up during operation, preferably the FOV 62 is narrow enough such that the FOV 62 does not see or intercept the hot wall 50 and does not see or intercept the nozzle 26. As an example illustrated in FIG. 4, the FOV 62 can be a 5° diverging cone which is sufficiently narrow to not intercept the wall 50. The divergence angle required of the FOV 62 is preferably determined by the length and by the inside diameter 56 of the hollow core 48. It should be noted that the FOV 62 can be of other sizes and orientations.

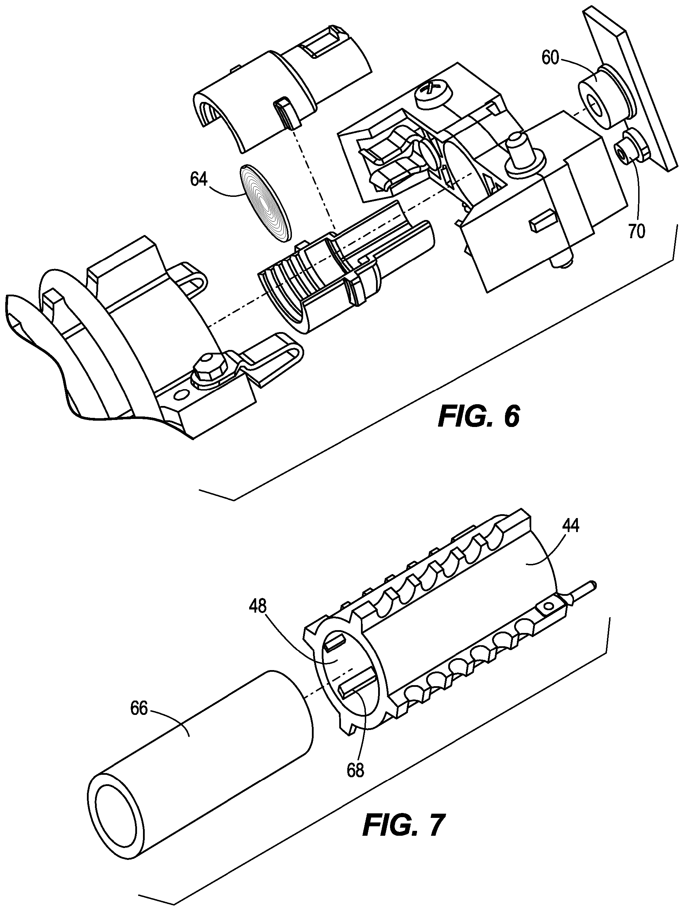

The IR sensor 60 utilized can come with a predetermined FOV, it can be an IR sensor 60 with an adjustable FOV to be programmed or if the FOV is fixed and too wide to not intercept the side wall 50, to change the FOV 62 of the IR sensor 60, a Fresnel lens 64 in front of the IR sensor 60 can be utilized to change the FOV 62 to the desired divergent angle as is shown in FIG. 6.

In addition to or in replace of a narrow FOV 62, the hollow core 48 can be insulated such that it does not appreciably heat up during operation. Insulation such as Insulon Advance Vacuum Insulation available from Concept Insulon can be utilized, however, other types of insulation can also be used.

As shown in FIG. 7, an IR sensor 60 with a standard FOV 62 can be used in conjunction with a tube of highly insulated material 66 inserted into the hollow core 48. Ribs 68 allow air to flow on both sides of the tube 66. A portion of the non-heated air coming from the fan 38 is channeled down the hollow core 48. The combination of airflow down the center of the heating element 44 and the tube 66 keeps the elevated temperature from being seen by the IR sensor 60 thus preventing adverse effects on the accuracy of the IR sensor 60 in measuring a surface temperature.

Referring back to FIGS. 4 and 5, the heat gun 20 preferably also includes a laser 70 such as a single laser located as close to the IR sensor 60 as possible, such that a light beam from the laser 70 is generally parallel to a center axis of the FOV 62 of the IR sensor 60. The laser 70 is used to indicate the approximate center of the surface area being heated as will be described in detail below. For example, a laser 70 such as model S636501D available from Egismos can be utilized, however, it should be noted that other lasers can also be utilized with the present invention. The IR sensor 60 and the laser 70 can be in hard wired electrical communication with the control board 42 or mounted to a sensor connector as will be described in detail below.

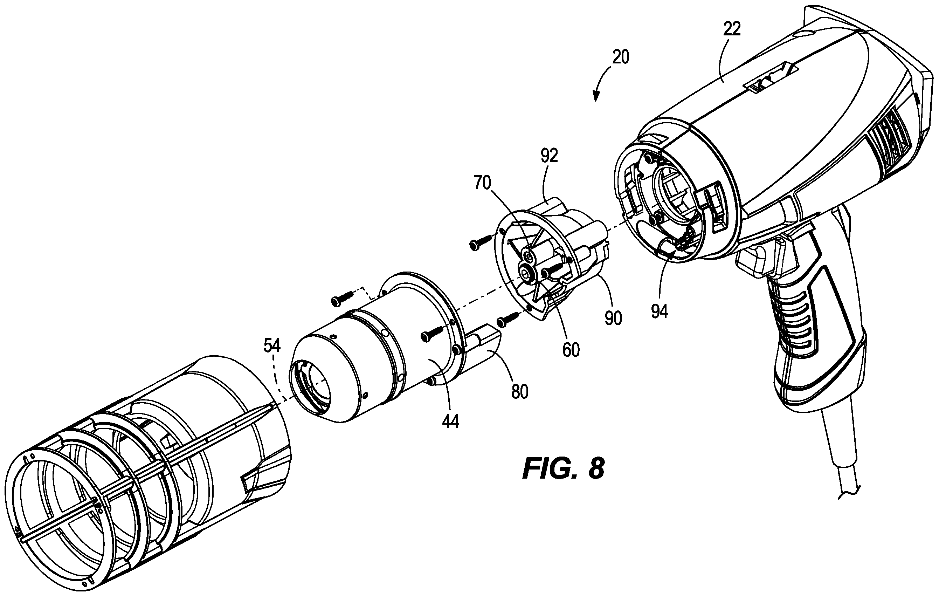

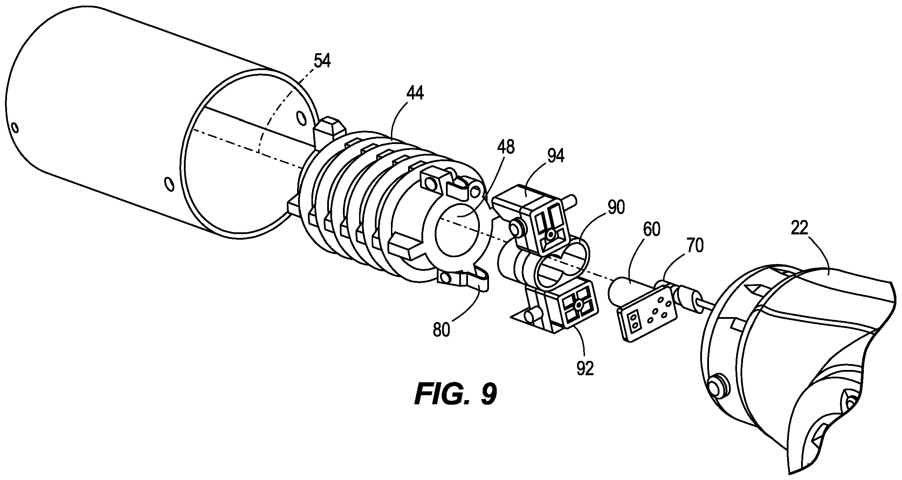

As shown in the drawings, the heating element 44 not only accommodates the IR sensor 60 sensing through the hollow core 48, but the heating element 44 can also be designed to be plugged in for a quick change out from the heat gun 20 for service or for replacement. Turning to FIGS. 8, 9 and 24, the heating element 44 is in shown in two embodiments with electrical connectors 80 such as connection clips available as 350218-3 male in the element and 350536-3 female in the power module 35 from TE Connectivity, however, other electrical connections 80 can also be utilized. The following are examples of heating elements 44 designed to be plugged into the heat gun 20.

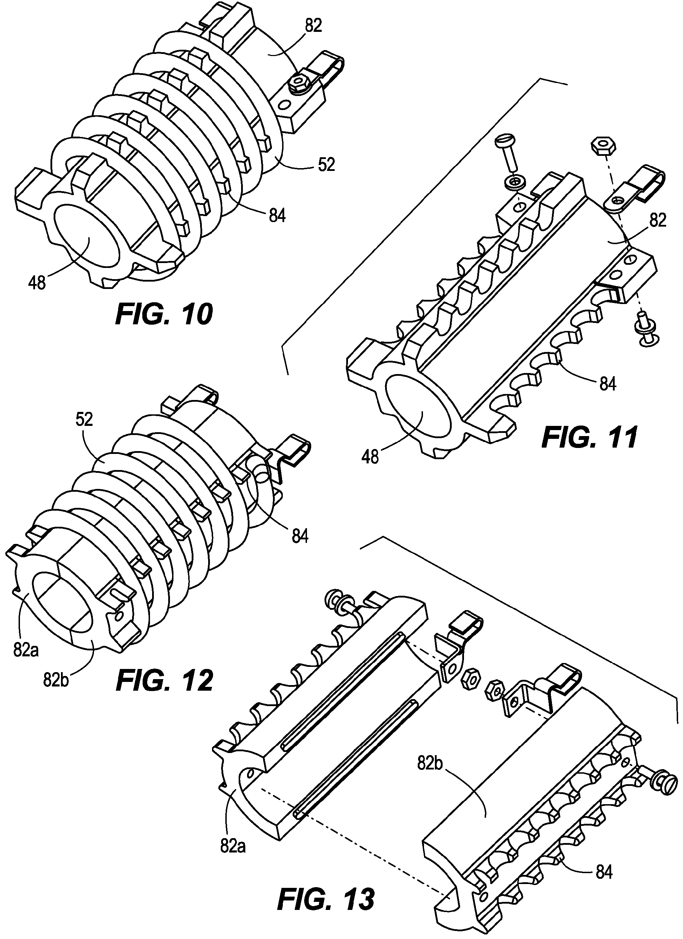

FIGS. 10 and 11 illustrate a single molded ceramic core 82 with an optionally tapered hollow core 48 having the smallest opening near the IR sensor end and increasing as it progresses toward the nozzle end. Integral fins 84 separate the wire coil 52 that is wrapped radially.

FIGS. 12 and 13 illustrate two molded ceramic cores 82a and 82b when mated together form a hollow core 48 having the smallest opening near the IR sensor end and increasing as it progresses toward the nozzle end. Integral fins 84 separate the wire coil 52 that is wrapped radially.

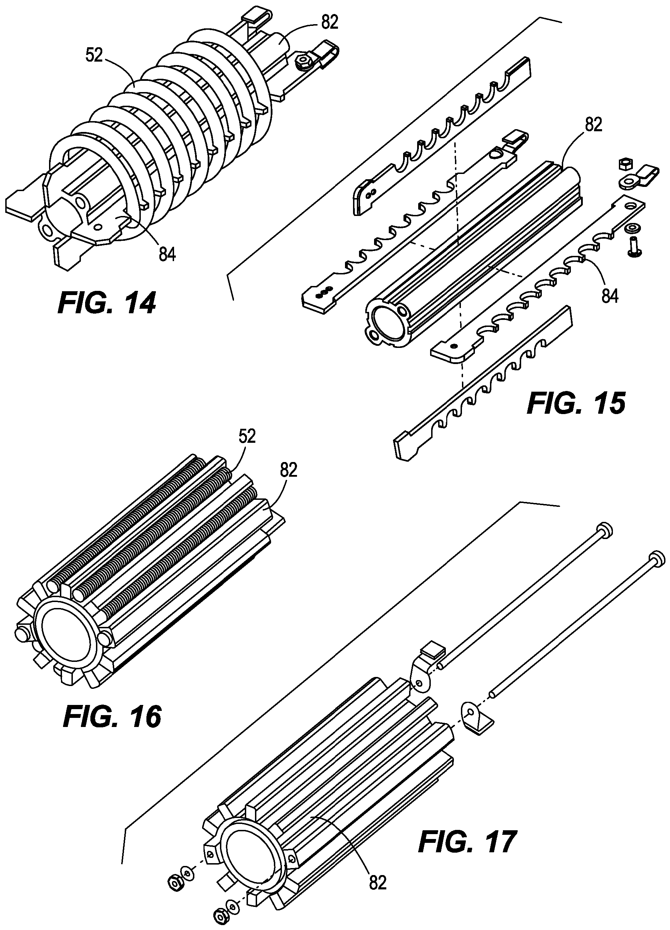

FIGS. 14 and 15 illustrate a one-piece ceramic extrusion with hollow core 82 with mica fins 84 and the wire coil 52 wrapped radially.

FIGS. 16 and 17 illustrate a one-piece ceramic extrusion with hollow core 82a and 82b with the wire coil 52 wrapped longitudinally.

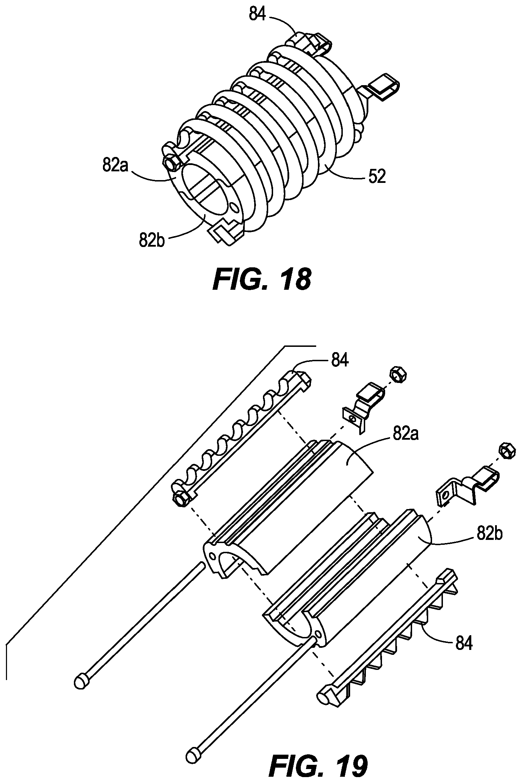

FIGS. 18 and 19 illustrate a two-piece extruded ceramic core 82 with separate mica or ceramic fins 84 and the wire coil 52 wrapped radially.

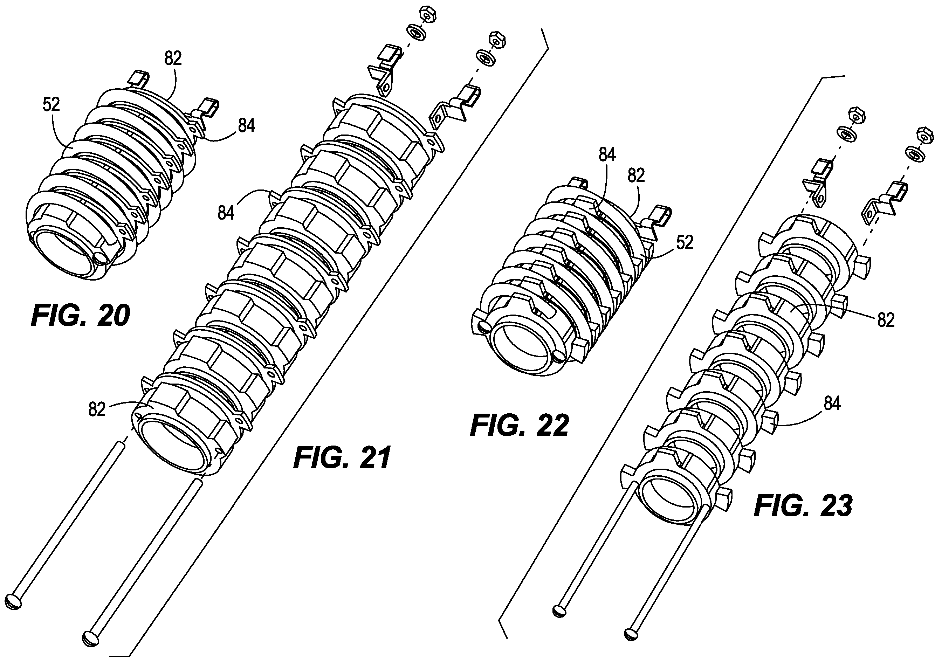

FIGS. 20 and 21 illustrate a multi-piece pressed segments ceramic core 82 with mica between segments to form fins 84 and the wire coil 52 wrapped radially.

FIGS. 22 and 23 illustrate a multi-piece pressed segments ceramic core 82 with mica between segments to form fins 84 and the wire coil 52 wrapped radially.

Turning to FIGS. 8, 9 and 25, a sensor holder 90 can be utilized to align and to position the IR sensor 60 and optionally also the laser 70. The sensor holder 90 holds the IR sensor 60 and the laser 70 in the desired position relative to the heating element 44 and the central axis 54. The sensor holder 90 aligns the central axis 54 with the field-of-view of the IR sensor 60. The sensor holder 90 mechanically attaches to the main housing 22. The IR sensor 60 and the laser 70 utilize electrical connectors 70 such as JST Sale America Inc. Jumper 05ZR-8M-P. If a Fresnel lens is utilized, the sensor holder 90 can also hold and align the Fresnel lens in the desired position to maintain the proper field-of-view of the IR sensor 60. The sensor holder 90 is mounted or secured to the main housing 22 using screws or trapped between the two halves of the main housing 22, however, other methods can also be utilized.

The sensor holder 90 preferably works in conjunction with the plugged in heating element 44. The electrical clips 80 of the plugged in heating element 44 are plugged in to receptors 94 on the sensor holder 90, or within the main housing 22, or plugged into the power module 35. To remove the plugged in heating element 44, the electrical connectors 80 are removed from the receptors 94. It should be noted that other plug-in methods can also be utilized.

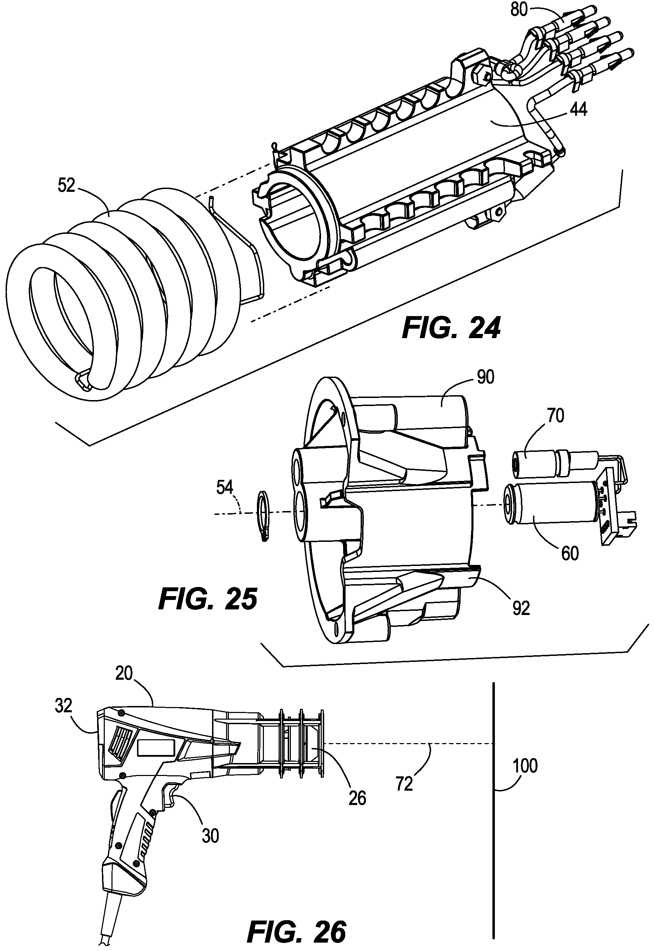

With reference to FIG. 26, use of the heat gun 20 is illustrated with respect to a surface 100. The heat gun 20 is suitably programmed at the control display 32 with a desired temperature and/or maximum temperature of the surface 100 to be heated. The trigger 30 is operated to start the flow of hot air to the surface 100 and the light beam 72 emanating from the laser 70 is pointed at the surface 100. The IR sensor 60 senses the temperature of the surface 100, and the control board 42 will control the hot air flow in conjunction with the programmed desired surface temperature. The use of the IR sensor 60 positioned to sense through the hollow core 48 of a heating element 44 enables sensing down the middle of the heating element 44 to improve the accuracy of the surface temperature being measured and to resolve the possibility of the IR sensor 60 being defeated by an obstruction either purposefully or accidentally. Such use and positioning of an IR sensor 60 ensures the surface 100 being measured by the IR sensor 60 is the surface that is being heated by the heat gun 20, regardless of the distance the heat gun 20 is held away from the surface 100.

The heat gun 20 can also be mounted, semi-permanently or permanently, to a surface or to a machine so as not to have a user handle and so as not to be readily moveable by the user. In this arrangement, the heat gun 20 is mountable near surface to be temperature measured and operates in the same manner as described above.

Various features and advantages of the invention are set forth in the following claims.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### Preferred features of the invention:

1. A heat gun for heating a surface comprising:
   a motor;
   a fan;
   a heating element having a central axis; and
   an IR sensor for measuring a temperature of the surface and positioned to sense along the central axis of the heating element.
2. The heat gun of clause 1 wherein the heating element includes a hollow core.
3. The heat gun of clause 2 wherein the IR sensor senses through the hollow core of the heating element.
4. The heat gun of clause 2 or 3 wherein the IR sensor has a field-of-view that is smaller than an inside diameter of the hollow core of the heating element.
5. The heat gun of clause 4 wherein the field of view is a 5-degree diverging cone.
6. The heat gun of any preceding clause wherein the IR sensor is positioned adjacent to the heating element.
7. The heat gun of clause 2 or any clause dependent thereon wherein the IR sensor is positioned concentric with the hollow core of the heating element.
8. The heat gun of any preceding clause and further including a laser.
9. The heat gun of clause 8 wherein the laser emits a light beam that is parallel to a central axis.
10. The heat gun of clause 2 or any clause dependent thereon wherein the IR sensor has a field-of-view that does not intercept a wall that defines the hollow core.
11. The heat gun of clause 4 or any clause dependent thereon and further including a Fresnel lens to adjust to a field-of-view of the IR sensor.
12. The heat gun of any preceding clause and further including a sensor holder to which the IR sensor is mounted.
13. The heat gun of clause 12 wherein the sensor holder aligns the IR sensor to sense along the central axis of the heating element.
14. The heat gun of clause 12 or 13 wherein the heating element is physically connected to the sensor holder.
15. The heat gun of any preceding clause wherein, when run in heat mode, air blown by the fan passes around an exterior of the heating element, before leaving the heat gun.
16. The heat gun of claim 16, when dependent upon clause 2, wherein air blown by the fan does not pass through the hollow core of the heating element.
17. A heat gun comprising:
   a housing;
   a power module;
   a control board;
   a heating element having a hollow core with an inside diameter;
   an IR sensor for measuring surface temperature by concentrically sensing temperature through the hollow core and having a field-of-view smaller than the inside diameter of the hollow core; and
   a laser emitting a light beam parallel to a center axis of the field-of-view of the IR sensor.
18. The heat gun of clause 17 and further including a sensor holder to which the IR sensor and the laser are mounted, the sensor holder positioning the IR sensor to sense through the hollow core.
19. A surface temperature measuring assembly for use with a heat gun having a heating element with a hollow core comprising:
   a holder positionable within the interior of the heat gun adjacent the heating element; and
   an IR sensor for measuring surface temperature and mountable in the holder and having a field-of-view within the hollow core of the heating element and in electrical communication with the heat gun.
20. The surface temperature measuring assembly of clause 19 and further including a laser mountable in the holder.
21. The surface temperature measuring assembly of clause 19 or 20 wherein the IR sensor is concentric with the hollow core of the heating element.
22. The surface temperature measuring assembly of any one of clauses 29 to 21 wherein the heating element has a wall surrounding the hollow core and wherein the field-of-view does not intercept the wall.
23. The surface temperature measuring assembly of any one of clauses 19 to 22, wherein the holder has a first connection arrangement to allow the holder to be removably connected to the heating element.
24. The surface temperature measuring assembly of clause 23 wherein the first connection arrangement includes an electrical connection, to allow electrical power to flow between the holder and the heating element.
25. The surface temperature measuring assembly of any one of clauses 19 to 24, wherein the holder has a second connection arrangement to allow the holder to be removably connected to the heat gun.
26. The surface temperature measuring assembly of clause 25 wherein the second connection arrangement includes an electrical connection, to allow electrical power to flow between the heat gun and the holder.
27. A heat gun comprising:
   a main housing including a power module;
   a plug in heating element selectively removable from the power module and electrically communicable with the power module, the heating element having a hollow core; and
   a sensor holder positioned between the power module and the heating element, the sensor holder supporting an IR sensor.
28. A heat gun according to clause 27, wherein the sensor holder further supports a laser.
29. The heat gun of clause 27 or 28 wherein the sensor holder supports the IR sensor such that a field of view of the IR sensor is aligned with or substantially aligned with a central axis of the hollow core of the heating element.
30. The heat gun of any one of clauses 27 to 29, wherein the heating element can be repeatedly attached to, and removed from, the power module without the use of tools.
31. A heating element for use with a heat gun, the heating element comprising:
   a hollow core having an inner surface and an outer surface;
   one or more protrusions extending outwardly from the outer surface; and
   one or more retaining sites provided on each of the one or more protrusions, the retaining sites being spaced apart from the outer surface of the hollow core.
32. A heating element according to clause 31, wherein the one or more protrusions are formed integrally with the core.
33. A heating element according to clause 32, wherein the one or more protrusions are attached to the outer surface of the core.
34. A heating element according to any one of clauses 31 to 33, wherein some or all of the retaining sites comprise indentations or troughs into which a heating wire may be received.
35. A heating element according to clause 34 wherein, when a heating wire is received in the indentation or trough, the heating wire is spaced apart from the outer surface of the core.
36. A heating element according to any of clauses 31 to 35, wherein the or each protrusion comprises an elongate rib or fin, with a series of retaining sites provided along the length thereof.
37. A heating element according to any one of clauses 31 to 36, wherein the core is formed in two or more parts.
38. A heating element according to clause 37, wherein the core has a central axis, and the two or more parts join each other along joining lines which are parallel or substantially parallel with the central axis.
39. A heating element according to clause 37, wherein the core has a central axis, and the two or more parts join each other along joining lines which are perpendicular or substantially perpendicular to the central axis.

## Claims

1. A heat gun for heating a surface comprising:
a motor;
a fan;
a heating element having a central axis; and
an IR sensor for measuring a temperature of the surface and positioned to sense along the central axis of the heating element.

2. The heat gun of claim 1 wherein the heating element includes a hollow core.

3. The heat gun of claim 2 wherein the IR sensor senses through the hollow core of the heating element.

4. The heat gun of claim 2 or 3 wherein the IR sensor has a field-of-view that is smaller than an inside diameter of the hollow core of the heating element, and preferably wherein the field of view is a 5-degree diverging cone.

5. The heat gun of any preceding claim wherein the IR sensor is positioned adjacent to the heating element.

6. The heat gun of claim 2 or any claim dependent thereon wherein the IR sensor is positioned concentric with the hollow core of the heating element.

7. The heat gun of any preceding claim and further including a laser.

8. The heat gun of claim 7 wherein the laser emits a light beam that is parallel to a central axis.

9. The heat gun of claim 2 or any claim dependent thereon wherein the IR sensor has a field-of-view that does not intercept a wall that defines the hollow core.

10. The heat gun of claim 4 or any claim dependent thereon and further including a Fresnel lens to adjust to a field-of-view of the IR sensor.

11. The heat gun of any preceding claim and further including a sensor holder to which the IR sensor is mounted.

12. The heat gun of claim 11 wherein the sensor holder aligns the IR sensor to sense along the central axis of the heating element, or wherein the heating element is physically connected to the sensor holder.

13. The heat gun of any preceding claim, further comprising:
a housing;
a power module; and
a control board.

14. The heat gun of claim 2 or any claim dependent thereon, wherein:
the hollow core of the heating element has an inside diameter; and
the IR sensor is for measuring surface temperature by concentrically sensing temperature through the hollow core and having a field-of-view smaller than the inside diameter of the hollow core.

15. The heat gun of claim 14 and further including a sensor holder to which the IR sensor and the laser are mounted, the sensor holder positioning the IR sensor to sense through the hollow core.
